# EUROPEAN PATENT APPLICATION

(11) **EP 2 186 417 A2**
(43) Date of publication of application: **19.05.2010**
(21) Application number: 09175700.5
(22) Date of filing: 11.11.2009
(51) Int. Cl.: A23C 19/068, A23C 19/16, A01J 21/02

(54) **Coated cheeses**

(30) Priority: 12.11.2008 NL 2002202
(71) Applicant: Friesland Brands B.V., 7943 PE Meppel (NL)
(72) Inventor: van Arem, Everhardus Jacobus Franciscus, 8802 CR Franeker (NL); Bakker, Berend Hendrik Arnoldus, 9842 PJ Niezijl (NL); Feenstra, Rients, 8502 BM Joure (NL); Prij, Roelof, 7948 CJ Nijeveen (NL)
(74) Representative: Hatzmann, Martin

(57) **Abstract**

The present invention relates to a process for the application of a semi-permeable coating to cheeses with the aim of controlling the evaporation of moisture. In addition, the invention relates to cheeses containing a coating, which cheeses are cheeses of the hard- or semi-hard-type, and particularly Gouda and Edam type cheeses.

## Description

The present invention relates to cheese, and especially cheese of the hard and semi-hard type, being cheeses having a moisture content in the fat-free cheese of less than 63 wt.%, including Dutch type cheeses, such as Gouda and Edam type cheeses. In addition, the invention relates to a method for applying a coating to a cheese of said type, and to a method for regulating this moisture loss of the different surface areas of cheese.

Particularly, the invention relates to the coating layers of cheeses.

Hard and especially semi-hard cheeses, such as Gouda and Edam type cheeses, are always provided with a coating. Such a coating is required to protect the cheese against ambient influences so as to prevent, *inter alia*, reduction through evaporation and damage. In addition, the formation of a rind can be reduced when using suitable coating materials. By applying a coating, the quality and storage life of the cheeses are substantially improved, while in addition coating layers may also improve the appearance of the cheeses. In the present invention, these advantages are obtained and even improved.

The most important coating materials used in the cheese industry are those based on one phase, such as paraffin or cheese wax, which materials are essentially not permeable for moisture; or emulsions which are usually applied in several layers, such as cheese plastic, emulsions of polyvinyl acetate copolymers, which material is moisture permeable.

The emulsion type coating materials, which materials lead to moisture permeable coatings, are used to let the cheeses ripen in a natural way. In this ripening procedure, it is of importance that the cheeses loose moisture. Instead of cheese plastic, other materials may be used to obtain similar effects, e.g. polysaccharides, proteins and polyethylene acetate.

The coatings that are essentially impermeable are used to maintain the weights of the cheeses in the distribution channels. Because all moisture is retained in cheeses having such a coating, the keeping properties of such cheeses may decrease.

In EP-A-1 051 903, a coating layer is described that is both gas-proof and moisture-proof. The moisture-proof layer is important to the weight retention of the cheese, while the gas-proof is important to the prevention of mould growth under the coating layer. Thereto, a cheese is provided with a coating layer, which coating layer comprises a substantially gas-proof and moisture-proof intermediate layer, which intermediate layer substantially consists of solid mono- and, if required, diglycerides, on the exterior of which intermediate layer is present at least one supplementary layer applied from an emulsion; said supplementary layer preferably comprising cheese plastic.

The material used for the intermediate layer described in all details in EP-A-1 051 903, and especially the acetic acid esterified (acetylated) monoglycerides are preferably used in the present invention. Cheeses are first coated with a conventional cheese plastic, subsequently by the intermediate layer that substantially consists of solid mono- and optionally diglycerides, and on the outside optionally by a protective layer, preferably emulsion based. A preferred product used in the present invention, that is based on mono- and diglycerides, is commercially available under the tradename Tegomüls (*ex* Degussa, Germany).

A cheese solely coated with cheese plastic looses during ripening about 30 g/m²/day of moisture; a cheese solely coated with cheese wax or paraffin looses less than about 1 g/m²/day, while a cheese coated with the multilayered coating of EP-A-1 051 903 looses 3-9 g/m²/day, on average about 6 g/m²/day.

Cheeses having such multilayered coating loose relatively small amounts of moisture and develop less thick rinds. These effects are advantageous, especially when the cheese is of the low-fat type.

In a preferred embodiment of the present invention, which will be elaborated herein-below, cheeses treated as described in EP-A-1 051 903 are used.

The present invention aims to improve the moisture control by controlling the moisture permeability of the coating material. Particularly, the present invention aims to provide cheeses wherein the reduction of cheese by evaporation of moisture, the drying-in of cheese, is as uniform as possible.

This aim is reached by a method, wherein a semi-permeable material is applied to the cheese in a non-uniform thickness, in such a way that the thickness is higher on areas that, when conventionally treated, loose more moisture, and is lower on areas that, when conventionally treated, loose less moisture.

Hence, in a first aspect, the present invention relates to a method for applying a semi-permeable coating to a cheese, wherein more coating is applied to those surfaces of the cheese which show a relatively higher moisture loss (than when conventionally treated) than to the surfaces which show a relatively lower moisture loss.

In a further embodiment, the invention relates to a method for regulating the moisture loss of different surface areas of a cheese by applying a semi-permeable coating to a cheese, wherein more coating or a less moisture-permeable coating is applied to those surfaces of the cheese which show a relatively higher moisture loss (than when conventionally treated) than to the surfaces which show a relatively lower moisture loss.

In a preferred embodiment, the coating is applied in the conventional way, and subsequently, while the coating is still viscous or wet, part of the coating is removed from the surfaces which provide a relatively low moisture loss (when conventionally treated). A much used way of applying coating to a cheese is by dipping the cheeses in a solution of coating material, preferably while using a robot arm in a computer-guided procedure. Generally, this is done by coating half of the outer surfaces of the cheese, and the subsequent solidification and/or drying of the coating material, after which the other half is coated using the same technique. Other techniques, like spraying, rubbing, immersing, pouring over or otherwise spreading coating materials, may however be used as well.

Preferably, the removal is carried out by scraping or bristling the cheese to which the liquid coating material is applied over a suitable tool or bristle. The amount to be removed can be adjusted by the skilled person, taking into account the viscosity of the coating material, the temperature of the coating to be removed and the speed of removing etc.

It is however also possible to apply more coating to specific areas of the cheeses in subsequent steps.

The areas or surfaces that require more coating material than other areas are those areas of the cheese which when conventionally treated show the highest amount of evaporation and hence drying-in. These areas are known to the skilled person. In addition, the amounts may be determined by monitoring the quality of the cheeses prepared. That is, if the coating layer is too thick, moisture will accumulate under the coating; if the coating layer is too thin, pores will form in the coating material, which may result in the formation of moulds in those areas. In other words: the coating material must be applied with the intention and in such a way that a coating results that allows sufficient permeability to support the ripening process, yet may not be so permeable that defects of the rind occur.

Areas of the cheese outer surface which have a lower average evaporation of moisture than other areas are for instance those areas that contact shelves or other supports in a cheese warehouse, where the cheeses ripen. On such areas, the coating is supplied in an amount of preferably about 2-4 g/dm², while on the other surfaces the coating is applied in amounts of about 4.5-7 g/dm², the amounts being in grams material after solidification and/or drying. For wheel-form or block-form cheeses, for instance Gouda or Edam type cheeses, the contact areas are generally the major surfaces, while the sides should obtain a thicker coating.

Contrary to the present invention, wherein coating is intentionally applied to obtain a more uniform drying-in, the prior art teaches some situations wherein unintentionally some differences in coating thickness occur. For instance does EP-A-0 615 696 describe coating comprising alginate and rice starch as bond coatings for cheese.

In Example 3 of this prior art document, the alginate-rice starch coating is applied twice to the band of a Maasdam cheese by means of a sponge, in a 1 mm thick layer. The flat faces are in total 1 time covered with alginate according to Dutch patent application NL9300470. In the Dutch application referred to, it is though described that the flat faces are covered with a 2 mm layer of alginate, while the bands are covered with 1 mm each time. Accordingly, the thickness of the coating is 2 mm, both on the flat sides and on the band of the cheese. In addition, it is noted that the band coating of EP 0 615 696 has only a supporting function. Nothing is mentioned about regulation of moisture loss when applied as a band coating for cheeses.

EP-A-1 917 862 teaches an anti-blistering coating for cheeses comprising wax particles. From paragraph [0050] at page 7 it is clear that a uniform coating is desired while non-uniform protective layers should be avoided. The example of this prior art document describes a procedure for covering a Gouda cheese with the coating of the invention taught in EP-A-1 917 862, according to which the coating is first applied to the "top half of the cheese as well as on the sides" (page 10 paragraph [0082]) and after drying and turning the cheeses, the coating is applied again in the same manner. It is not clear whether in this procedure the sides are covered twice, or each time only for a half, thus, once in total. Even if they are covered twice, it is still unclear, as in the document discussed in the previous paragraph, whether covering twice directly results in a twice thicker layer.

EP-A-1 543 727 describes a coating, for preferably process, cheeses with an embedded tear strip in order to disengage the cheese from the coating. The tear strip is covered on both sides with wax and can be perforated so that both wax layers contact with each other through the holes in the tear strip.

If such a construction leads to thickness differences or if such a small thickness difference is detectable, it does not bear any function (column 4 lines 10-15 of EP-A-1 543 727) and, thus, does not lead to any advantage such as optimized moisture loss as in present invention.

EP-A-0 811 664 relates to coating compositions, in particular, for cheese. On page 2 lines 24-28 it is mentioned that conventional dipping of cheeses in a heated, liquefied coating leads to a non-uniformity of the layer thickness on the bottom of the cheese in the form of a droplet.

WO-A-2008/110550 describes double-layer coatings for food such as cheese, which can be easily removed by heating. This document is silent on moisture regulating coatings for cheese.

In a second aspect, the present invention relates to cheeses having a coating of non-uniform thickness. Particularly, the coating on these cheeses is such that the drying-in of the cheese itself is more uniform than when those cheeses are prepared using a conventional, uniform coating.

In a preferred embodiment, wheel- or block-form cheeses have an amount of coating of about 1-4.45, preferably 2-4 g/dm² on their major surfaces, while on the other surfaces the coating is applied in amounts of about 4.5-8, preferably 4.5-7 g/dm².

Actually, on those areas of a cheese where the rind when prepared in a conventional way of the prior art will be thicker, the amount of coating to be applied in the process of the present invention may be higher.

The coating material to be applied in non-uniform form may be any semi-permeable coating material, such as thin paraffin layers: layers of waxes; mono-, di- and triglycerides; acetic-, lactic-, citric-, tartaric-, diacetyltartaric esters of mono- and diglyericides and mixtures thereof.

Dependent on the type of coating material and the thickness and position of the coating material on the cheeses, the moisture loss can be carefully controlled.

Since the permeability of a coating layer can also depend on the type of the semi-permeable material used, a more uniform drying-in can also be reached by applying a less permeable material on areas that, when conventionally, treated, loose more moisture, and a more permeable material on areas that, when conventionally treated, loose less moisture.

A non-uniform coating, as used in this description, can therefore be understood as a coating with a non-uniform thickness along the interface with a cheese, as well as a coating with non-uniform permeability properties along the interface. Preferably, a non-uniform coating is applied to a cheese in such a way that it results in a more uniform drying-in of the cheese and/or in the development of a rind with a more uniform thickness.

The coated cheeses have a more uniform rind thickness, a less thick rind, and the cheeses are more creamy than conventionally coated cheeses. In a test, the inventors have determined that consumers have a preference for the cheeses of the present invention. The advantages obtained by the present invention are higher when the cheeses are ripened for a longer period.

Incidentally, the ripening process proceeds slightly different than in a process wherein the coating material is applied in a uniform, conventional way. Particularly, the cheeses are more, smooth, creamy in consistency (less elastic).

Particularly, moisture is maintained in those parts of the cheese where moisture does not lead to any harm and even leads to advantages (less thick rinds, for instance) including a higher yield in cheese. A more even moisture profile is obtained throughout the cheese.

Another advantage is that in cheese warehouses the conditions, especially with an eye on the relative humidity may be less critical. That is, with conventional cheeses it was essentially the relative humidity that was responsible for the moisture loss, where in the method of the present invention the non-uniform coating assists directly in the evaporation process.

Also in the processing of the finished cheeses, advantages are obtained. Especially with low(er)-fat cheeses, which generally are more firm than fatter cheeses, advantages are obtained with the cutting of the cheese, in that knives or other cutting means wear less quickly. In addition, when cutting the cheese in slices, the slices have a more uniform weight.

In a preferred embodiment, the present invention uses as coating material a material that essentially consists of solid mono-, and optionally diglycerides, described in detail in EP-A-1 051 903, more preferably solid acetylated monoglycerides (and optionally diglycerides).

More in detail, cheeses are prepared in a conventional manner, after which the uniform coating layer may be applied to the "natural" rind, as it is formed during the ripening process on the young cheeses. More commonly, however, the fresh, young cheeses are first coated with a sub-layer, which is applied during the (early) ripening process. Such a sublayer can be any sublayer known to the person skilled in the art, such as, for instance, cheese plastic (polyvinyl acetate copolymers), which is preferred, or sublayers prepared from polysaccharides, proteins, other polyvinyl acetate polymers or polyethylene acetate.

The advantage of the use of such a sublayer is that the favorable properties thereof can be used while the acetylated mono- and diglycerides partly removes the drawbacks involved in the use of a mono-material sublayer.

By now using the non-uniform coating layer according to the invention, it is possible to apply to the cheese a coating layer having properties which have been highly optimized and adapted to the desired application, and even further optimized than the coatings taught in EP-A-1 051 903. The use of the non-uniform coating layer further enables combinations of materials which, through their chemical and/or physical properties, usually do not adhere or adhere only with difficulty together. It will be clear that this enables a plurality of combinations which can substantially improve the properties of the coating layer.

The mono- and diglycerides which, according to the invention, are used for the intermediate layer are preferably fatty acid esters of acetylated mono-and diglycerides.

To obtain a moisture- and gasproof layer having a sufficient strength at room temperature, in particular mono- and diglycerides having a melting temperature above 30 °C are suitable. Preferably suitable, however, are mixtures of monoglycerides of differently composed molecules, that is to say with different acetylation degrees and different chains and different chain lengths of the fatty acid groups. Such mixtures can, if required, be supplemented with the same result by mixtures of diglycerides, which can also have different acetylation degrees and different chains and different chain lengths of the fatty acid groups. Such mixtures of different compounds often show a melting range instead of a melting point. It has been found that such mixtures lead to a robust system if the liquid products have a melting range starting at about 30 °C and continuing to at least above 40 °C, for instance to 50 °C, preferably to 45 °C. When the mono- and diglycerides in molten condition have too low a viscosity, this leads to a thin coating which, moreover, will easily break or tear. This impedes the application of a good and sealing outer coating layer. In general, a superior intermediate layer is obtained, that is to say a more robust layer having better barrier properties with respect to gas-and moistureproofness, if the molten mono- and diglyceride has a higher viscosity. The elasticity of the intermediate layer is then higher, which has the result that this layer forms a more stable substratum for the outer layer.

Preferably suitable compounds for the coating layer according to the invention are monoacetic acid mono- and diglycerides built up from unsaturated fatty acids having a chain length of more than 10.

The average thickness of the coating layer is generally such that the mono- and diglyceride material application is not more than 2.5 wt.%, preferably not more than 2 wt.%. This depends, inter alia, on the size and shape of the cheese. With large cheeses the material application will usually be lower in weight percents based on the cheese than with smaller cheeses. The minimum amount of material is the amount in which the gas-and moistureproofness is adequate, for instance 0.5 wt.% and preferably at least 1 wt.%, and generally between 1 and 1.5 wt.%.

A cheese provided with the coating layer substantially consisting of mono- and diglycerides can be excellently coated with a supplementary layer. This supplementary layer can have both a hydrophilic and a hydrophobic character. Without wishing to be tied down to any theory, the fact that both hydrophobic and hydrophilic materials can adhere to the mono- and diglyceride layer seems to be the result of the combination of the polar and non-polar characters which the mono- and diglycerides unite in themselves. The fatty acids in the glyceride have a long, non-polar tail, while the polar head of the molecule is formed by the acetylated glycerol backbone. Incidentally, according as the fatty acid tail is longer, the mono- and diglyceride will have a more apolar character. In general, this results in a highly moisture- and gasproof layer.

According to the invention the supplementary layer comprises a material obtained from an emulsion, for instance cheese plastic. Suitable emulsions are aqueous emulsions of the above polysaccharides such as alginate, proteins, polyvinyl acetate or polyethylene in which various additives may be present. Cheese plastic is understood to mean a material comprising polyvinyl acetate. Such cheese plastic is known to those skilled in the art and is often used in cheeses having a hard rind, such as Gouda or Edam cheese. The cheese plastic is supplied as an aqueous emulsion of polyvinyl acetate to which are further added, for instance, preserving agents such as natamycin, dyestuffs and/or acidity regulator such as acetic acid. After the application of the emulsion by means of brushing, immersing, etc., the emulsion is solidified or dried. This solidification normally takes a few seconds to minutes and for drying, a few hours to days and results in the formation of a rigid coating layer.

The cheese according to the invention has the important additional advantage that fillers can be easily absorbed in the supplementary layer, without necessarily affecting the moisture- and gasproofness of the coating layer and, moreover, without necessarily affecting the quality of the cheese, for this is shielded by the glyceride layer.

Such fillers can be used, for instance, to further improve the sensitivity to ambient influences. Another effect of the use of fillers is that the dry matter content of the layer is increased. When the coating layer is applied in liquid form, a higher dry matter content means that it can dry more rapidly. Also, the higher dry matter content can reduce the content of preserving agents.

Moreover, the use of fillers results in that the texture of the cheese rind can be influenced. In this manner the cheese can be given a slightly rough and mat exterior. The increased roughness will cause the cheese to be more easily manageable during automatic transport or processing, such as on conveyer belts or other types of automated apparatus. An additional favorable effect is that the cheese becomes a traditional appearance, which is appreciated by consumers.

Different materials are suitable for use as filler. Thus, the use of silicates or carbonates as filler can influence the moisture regulation of the coating layer. Preferably, the silicates suitable as filler are selected from the group comprising SiO₂, quartz, zeolite, lapis lazuli, sepionite, perlite, polysilicic acid, talc, orthosilicate, glass, porcelain, kieselguhr and diatomaceous earth. The carbonates suitable as filler are preferably alkali metal carbonates and/or alkaline earth metal carbonates, such as Na₂CO₃, K₂CO₃, NaHCO₃ and CaCO₃.

It is also possible to use fibers as filler. This can impart a roughness to the outer layer of the foodstuff, which offers advantages during the industrial processing of such a cheese, for instance by improving the frictional properties on conveyer belts and the like. An additional effect is that the cheese becomes a nice mat appearance, and that the color can thus be improved. Suitable fibers are, for instance, wood fibers, paper pulp, cotton and other cellulose materials. Incidentally, an increased roughness can also be obtained by the use of the above-mentioned silicates or carbonates.

Other possible fillers are thickeners. These fillers are, for instance, suitable for further improving the rigidity, elasticity and/or strength of the coating layer, but can also be used to influence the moisture regulation of the coating layer. Besides the above-mentioned fillers, thickeners suitable for the purpose are, inter alia, carboxymethyl cellulose, alginates, xanthan, modified or non-modified starch, etc.

Preferably, the content of filler is at most 70 wt.% based on the total weight of the supplementary layer, most preferred is a filler content ranging between 16 and 33 wt.%.

In the practice of the invention, conventionally prepared cheeses of the hard or semi-hard type are traditionally ripened for a time that is about half the essential ripening period, that is, generally, at least 4 weeks, preferably more than 6 weeks, such as 8 weeks for common Dutch type cheeses in cheese plastic or using a corresponding material. This allows the formation of the normal rind. Subsequently, the semi-permeable coating material is applied in the non-uniform thickness according to the present invention. This step leads to a reduction of evaporation of moisture from the cheese. Thereafter, a further layer of cheese plastic may be applied to give the cheese an appearance similar to standard cheeses.

In the method according to the present invention the application of the coating material is preferably carried out at a temperature which is high enough to obtain a sufficiently thin layer. Preferably, this is carried out at a temperature of 70°C or more and more preferably at a temperature of 110°C or more. Because the coating material, and especially the mono- and diglycerides, are not allowed to catch fire or to be evaporate and/or disintegrate, the temperature must not be too high. Preferably, the temperature is therefore not higher than about 150°C.

The present invention will be described in further detail, while referring to the following, non-limiting examples.

### Example 1

In a conventional way rectangular low fat cheeses are made using conventional recipes for a 30⁺ cheese and a 20⁺ cheese These cheeses were coated with cheese plastic and ripened for 8 weeks. During this ripening process the moisture content of the cheeses was determined. Then, the cheeses were half coated by means of a short immersion for a few seconds in a bath maintained at a temperature of 120°C substantially consisting of acetylated mono- and diglycerides (E472a) having a melting range of 35-45°C. Immediately afterwards, the cheeses were moved over a bristle removing part of the coating material from the major surface of the cheeses. The cheeses were allowed to solidify for one day. The following day, the other side of the cheeses were processed in the same way. On the major surfaces an amount of 2.5 g/dm² of Tegomüls ®, coating was present; on the sides an amount of 5 g/dm² coating was present. The ripening process was continued and the moisture content was monitored.

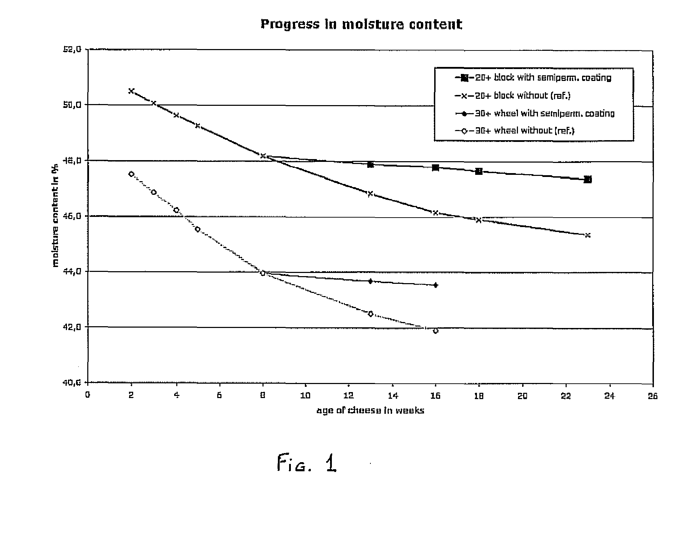

In Figure 1, the progress of the moisture content is shown *versus* the age of the cheeses in weeks.

A test panel qualified the cheeses containing the non-uniform coating layer as better in taste, more smooth, creamier than corresponding cheeses of the same type without the non-uniform coating layer.

## Claims

1. A method for applying a semi-permeable coating to a cheese, wherein more coating is applied to those surfaces of the cheese which show a relatively higher moisture loss than to the surfaces which show a relatively lower moisture loss.

2. A method for regulating the moisture loss of different surface areas of a cheese by applying a semi-permeable coating to a cheese, wherein more coating or a less moisture-permeable coating is applied to those surfaces of the cheese which show a relatively higher moisture loss (than when conventionally treated) than to the surfaces which show a relatively lower moisture loss.

3. The method of claim 1 or 2, wherein the coating is applied in a conventional manner, and subsequently part of the not yet solidified or drie coating is removed from the surfaces which show a relatively lower moisture loss.

4. The method of claim 3, wherein the coating is removed by brushing.

5. The method of any one of the preceding claims, wherein the semi-permeable coating consists of solid mono- and optionally diglycerides, preferably acetylated mono- and diglycerides.

6. The method according to any one of the preceding claims, wherein on the parts of the cheese that, in a cheese warehouse, contact the support, coating is applied in an amount of 2-4 g/cm² and on the other parts coating is applied in an amount of 4.5-7 g/cm².

7. Cheese having a non-uniform coating thickness, wherein the coating is applied in such a way that the drying-in is more uniform.

8. Cheese according to claim 7, having a wheel or block form, having an amount of coating of 2-4 g/cm² on the main surfaces and an amount of coating of 4.5-7.9 g/cm² on the side edges.

9. Cheese of claim 7 or 8 of the semi-hard or hard-type.

10. Cheese according to any one of the claims 7-9 of the Gouda or Edam-type.
